# EUROPEAN PATENT APPLICATION

(11) **EP 4 837 412 A1**
(43) Date of publication of application: **11.11.2026**
(21) Application number: 26176218.1
(22) Date of filing: 04.05.2026
(51) Int. Cl.: A01K 63/00, A01K 63/04

(54) **DISPENSING DEVICE FOR FLUID DELIVERY INTO AN AQUARIUM, RECIRCULATION SYSTEM, AND AQUARIUM COMPRISING SAID DISPENSING DEVICE**

(30) Priority: 06.05.2025 IT 202500010023
(71) Applicant: Askoll Holding S.r.l., 36031 Dueville (VI) (IT)
(72) Inventor: MARIONI, Elio, deceased (IT)
(74) Representative: Botti & Ferrari S.p.A.

(57) **Abstract**

A dispensing device (1) for fluid (F) delivery into an aquarium (100), said dispensing device comprising a fixed body (20) and a movable body (10) which is slidable with respect to the fixed body along a working axis (A). The fixed body comprises an inlet (21) configured to receive the fluid being supplied. The movable body comprises a fluid outlet configured to dispense the fluid, and a septum (12) extending transversally to the working axis and facing the internal volume of the movable body. The septum is configured to receive in impact the fluid coming from the inlet of the fixed body, to determine, as a result of the impact, a movement of the movable body with respect to the fixed body in a first sense after exceeding a reference flow rate of said fluid. The dispensing device further comprises a return element (30) acting on the movable body and configured to determine a movement of the movable body along the working axis in a second sense opposite the first sense.

## Description

### Field of application

The present invention relates to a dispensing device for fluid delivery into an aquarium and to an aquarium comprising said dispensing device.

The present invention also relates to an aquarium recirculation system comprising the dispensing device.

### Prior art

It is known that an aquarium is a transparent container filled with a fluid in liquid state that enables the breeding of fishes, mollusks, crustaceans, and amphibians, and/or the cultivation of aquatic or paludal plants. The aquarium may have various shapes and sizes. The liquid fluid may be a water-based fluid comprising further elements to keep the fauna and the flora contained in the aquarium healthy, such as mineral salts and nutrients.

Dispensing devices placed in an aquarium that are designed to dispense a fluid flow rate into said aquarium to maintain the fluid therein recirculated are also known in the state of the art. Recirculation of the fluid allows a filtration thereof through a respective filter, increases the surface of contact with air, thereby supporting gas exchange, prevents formation of stagnant areas inside which organic debris, pathogenic bacteria or algae could accumulate, and homogenizes the fluid temperature inside the aquarium. Therefore, a good and complete recirculation of the fluid inside the aquarium allows to maintain a healthy and stable environment for fish and possible plants.

Fixed dispensing devices are known in the state of the art, namely dispensing devices configured to direct the fluid flow along a predetermined fixed direction. Moreover, manually movable dispensers are also known, namely dispensers provided with a nozzle that can be oriented manually so as to direct the fluid flow to a desired area.

There are also known mobile dispensers that are configured to dispense the fluid flow in a direction that continuously varies over time, for example, by using a propeller driven by the fluid flow itself and kinematically connected to a movable nozzle, as described in US20050150042A1.

Document CN 116 076 429 B discloses an oxygenation device for aquaculture according to the prior art.

However, the Applicant notes that known dispensing devices have various disadvantages. First of all, fixed or manually movable dispensing devices allow the fluid to be dispensed along a fixed direction, resulting in nonuniform fluid recirculation inside the aquarium. The state-of-the-art movable dispensing device described above allows the flow delivery direction to be varied over time, but involves significant technical complexity (with associated drawbacks such as, for example, high manufacturing costs, potential failures, or jamming of the kinematic mechanism) and the inability to actively control the variation in dispensing direction over time.

A first objective of the present invention is thus to provide a dispensing device for aquaria capable of optimizing fluid recirculation inside the aquarium.

A further objective is to provide a dispensing device for aquaria that is easy to produce and reliable.

A further objective is to provide a dispensing device for aquaria whose delivery direction is actively controllable, without excessively complicating the technical architecture of the same.

### Summary of the invention

A first aspect relates to a dispensing device for fluid delivery into an aquarium, said dispensing device comprising a movable body and a fixed body; one of said movable body and said fixed body defining an internal volume; the other of said movable body and said fixed body being at least partially housed within said internal volume;
wherein:
- the movable body is slidable with respect to said fixed body along a working axis, said fixed body comprising an inlet configured to receive said fluid being supplied;
- the movable body comprises:
   ∘ at least one fluid outlet configured to dispense said fluid into the aquarium;
   ∘ a septum extending transversally to the working axis, said septum facing the internal volume of the movable body and being configured to receive in impact the fluid coming from said inlet of the fixed body,

wherein said septum is configured to determine, as a result of said impact, a movement of the movable body with respect to the fixed body along said working axis in a first sense after exceeding a reference flow rate of said fluid;
wherein the dispensing device further comprises at least one return element acting at least on said movable body and configured to determine a movement of said movable body with respect to the fixed body along said working axis in a second sense opposite said first sense.

In an embodiment, the movable body is an outer body, the fixed body is an inner body, and the movable body defines the internal volume within which the fixed body is at least partially housed.

In an alternative embodiment, the movable body is the inner body, wherein the fixed body is the outer body. Therefore, in this case, the fixed body defines the internal volume within which the movable body is partially housed. In this case, the fluid outlet of the movable body is positioned in a portion of the movable body that is not housed within the fixed body.

In a 2^{nd} aspect according to aspect 1, said return element comprises a float configured to transmit a return force on said movable body at least according to said second sense, in particular said float being constrained to the movable body.

In a 3^{rd} aspect according to any one of the preceding aspects, said return element comprises at least one elastic element, optionally at least one spring or one elastic cable, configured to transmit a return force on said movable body at least in said second sense, in particular said elastic element being operatively connected between the movable body and the fixed body.

In a 4^{th} aspect according to any one of the preceding aspects 2 and 3, wherein:
- in a first condition in which the fluid flow rate is greater than said reference flow rate, said septum determines a driving force on said movable body in the first sense that is greater than said return force of the return element, causing the movement of the movable body with respect to the fixed body in the first sense;
- in a second condition in which the fluid flow rate is less than said reference flow rate, said driving force on said movable body in the first sense is less than said return force of the return element in the second sense, causing the movement of the movable body in the second sense.

In a 5^{th} aspect according to any one of the preceding aspects, said at least one fluid outlet of the movable body comprises a first outlet and a second outlet positioned below the first outlet, in particular according to a direction parallel to the working axis.

In a 6^{th} aspect according to the preceding aspect, the first outlet is oriented along a first fluid delivery direction and the second outlet is oriented along a second fluid delivery direction transversal to said first fluid delivery direction.

In a 7^{th} aspect according to any one of the preceding aspects 5 and 6, the movement of the movable body along the working axis in the first sense and in the second sense selectively determines the opening and the closing, in particular complete or at least partial closing, of the first outlet and of the second outlet.

In an 8^{th} aspect according to any one of the preceding aspects 5 to 7, when the first outlet is in an open position to allow the fluid delivery, the second outlet is in a closed position to prevent the fluid delivery, and when the first outlet is in a closed position to prevent the fluid delivery, the second outlet is in an open position to allow the fluid delivery.

In a 9^{th} aspect according to any one of the preceding aspects 4 to 8, in the first condition the first outlet is in an open position and the second outlet is in a closed position.

In a 10^{th} aspect according to any one of the preceding aspects 4 to 9, in the second condition the first outlet is in a closed position and the second outlet is in an open position.

In an 11^{th} aspect according to any one of the preceding aspects in combination with aspect 6, said second direction deviates from the parallelism with the first direction by an angle of 20° to 80°, optionally between 30° and 65°.

In a 12^{th} aspect according to any one of the preceding aspects in combination with aspect 6, a virtual plane passing through and parallel to the first direction and the second direction is parallel to the working axis.

In a 13^{th} aspect according to any one of the preceding aspects in combination with aspect 6, the second direction of the second outlet is oriented to dispense fluid away from the first outlet.

In a 14^{th} aspect according to any one of the preceding aspects in combination with aspect 6, the second outlet faces in the opposite direction from the inlet of the fixed body.

In a 15^{th} aspect according to any one of the preceding aspects in combination with aspect 6, the first direction is orthogonal to the working axis.

In a 16^{th} aspect according to any one of the preceding aspects in combination with aspect 5, the second outlet faces towards a bottom wall of the aquarium.

In a 17^{th} aspect according to any one of the preceding aspects, the working axis is parallel to the direction of gravity when the dispensing device is installed inside the aquarium.

In an 18^{th} aspect according to any one of the preceding aspects, the movable body is sleeve-shaped.

In a 19^{th} aspect according to any one of the preceding aspects, the fixed body is sleeve-shaped.

In a 20^{th} aspect according to any one of the preceding aspects, the movable body and the fixed body are concentric with each other.

In a 21^{st} aspect according to any one of the preceding aspects, the fixed body comprises an internal hollow volume and a side opening to allow the fluid to flow from the inlet, through said internal hollow volume, and to exit through said side opening.

In a 22^{nd} aspect according to the preceding aspect, said side opening of the fixed body faces towards the movable body.

In a 23^{rd} aspect according to any one of the preceding aspects in combination with aspect 21, said side opening selectively faces the first outlet or the second outlet of the movable body according to a position taken by the movable body with respect to the fixed body during the movement thereof along the working axis.

In a 24^{th} aspect according to any one of the preceding aspects in combination with aspects 4 and 21, wherein:
- in the first condition the side opening faces the first outlet to deliver fluid through said first outlet, whereas a side surface of the fixed body blocks the second outlet;
- in the second condition the side opening faces the second outlet to deliver fluid through said second outlet, whereas a side surface of the fixed body blocks the first outlet.

In a 25^{th} aspect according to any one of the preceding aspects, the dispensing device further comprises a guide path configured to receive a pin, which are respectively integral to the fixed body and to the movable body or vice versa,
the displacement of the pin in the guide path causing a relative rotation of the fixed body with respect to the movable body at each successive movement in the first sense and/or in the second sense.

In an aspect 25A according to any one of the preceding aspects, the fixed body comprises an outer surface and the movable body comprises an inner surface facing said outer surface of the fixed body.

In a 26^{th} aspect according to the two preceding aspects, wherein:
- the outer surface (23) of the fixed body comprises the guide path and the inner surface of the movable body comprises the pin, protruding towards the fixed body, inserted in said guide path of the fixed body and configured to slide in said guide path, so that a movement of the movable body with respect to the fixed body is constrained to a shape of said guide path,
   or
- the inner surface (23) of the movable body comprises the guide path and the outer surface of the fixed body comprises the pin, protruding towards the movable body, inserted in said guide path and configured to slide in said guide path, so that a movement of the movable body with respect to the fixed body is constrained to a shape of said guide path.

In a 27^{th} aspect according to the preceding aspect, a change in the fluid flow rate above and below said reference flow rate is adapted to determine the movement of the pin along said guide path.

In a 28^{th} aspect according to any one of the two preceding aspects, said guide path defines a groove adapted to receive and guide the pin.

In a 29^{th} aspect according to any one of the preceding aspects in combination with aspect 25, said guide path is configured to determine, as a result of the mutual movement of the movable body with respect to the fixed body along the working axis, a rotation of the movable body with respect to the fixed body about the working axis.

In a 30^{th} aspect according to any one of the preceding aspects in combination with aspect 25, said guide path comprises at least one sawtooth portion extending along a direction orthogonal or transversal to said working axis.

In a 31^{st} aspect according to the preceding aspect, said at least one sawtooth portion extends circumferentially.

In a 32^{nd} aspect according to any one of the preceding aspects in combination with aspect 30, said sawtooth portion alternating vertical tracts and oblique tracts, wherein said vertical tracts are configured to constrain the movement of the movable body along, in particular only, said working axis, and said oblique tracts are configured to constrain the movement of the movable body both along said working axis and about said working axis to determine a rotation of the movable body with respect to the fixed body.

In a 33^{rd} aspect according to any one of the preceding aspects in combination with aspect 30, a change in the fluid flow rate above and below said reference flow rate is adapted to determine the movement of the pin along said at least one sawtooth portion of the guide path.

In a 34^{th} aspect according to any one of the preceding aspects in combination with aspect 30, a change in the fluid flow rate above and below said reference flow rate is adapted to determine the movement of the pin from tooth to tooth in said sawtooth portion.

In a 35^{th} aspect according to any one of the preceding aspects in combination with aspect 30, said at least one sawtooth portion comprises:
- a first sawtooth portion extending circumferentially between a respective first end and a second end, and
- a second sawtooth portion spaced apart from the first sawtooth portion along a direction parallel to said working axis, said second sawtooth portion extending circumferentially between a respective first end and a second end, in particular wherein said second sawtooth portion is placed below the first sawtooth portion.

In a 36^{th} aspect according the preceding aspect, said guide path further comprises:
- a first side tract arranged as a connection between the first end of the first sawtooth portion and the first end of the second sawtooth portion, and
- a second side tract arranged as a connection between the second end of the first sawtooth portion and the second end of the second sawtooth portion;
wherein the first sawtooth portion, the second sawtooth portion, the first side tract and the second side tract define in combination said guide path, inside which the pin is configured to slide in loop.

In a 37^{th} aspect according to the preceding aspect, the first side tract and the second side tract extend substantially parallel to the working axis.

In a 38^{th} aspect according to any one of the preceding aspects in combination with aspect 25, the guide path is configured to allow the pin to only slide clockwise or counterclockwise.

In a 39^{th} aspect according to any one of the preceding aspects in combination with aspects 35, wherein:
- when the pin is at the first sawtooth portion, the second opening of the movable body faces the side opening of the fixed body to allow the fluid to be dispensed from said second opening of the movable body;
- when the pin is at the second sawtooth portion, the first opening of the movable body faces the side opening of the fixed body to allow the fluid to be dispensed from said first opening of the movable body.

In a 40^{th} aspect according to any one of the preceding aspects in combination with aspects 35, wherein:
- when the pin is at the first sawtooth portion, the first opening of the movable body is in a closed position to prevent the fluid delivery, wherein the first opening of the movable body faces a closed side surface of the fixed body, optionally wherein the first opening of the movable body faces the guide path of the fixed body;
- when the pin is at the second sawtooth portion, the second opening of the movable body is in a closed position to prevent the fluid delivery, wherein the second opening of the movable body faces a closed side surface of the fixed body.

In a 41^{st} aspect according to any one of the preceding aspects in combination with aspects 30, wherein the at least one sawtooth portion comprises a primary sawtooth guide and a secondary sawtooth guide facing the primary sawtooth guide to define a groove therebetween which is adapted to receive in sliding the pin.

In a 42^{nd} aspect according to the preceding aspect, the pin is configured to transit in said groove in interposition between the primary sawtooth guide and the secondary sawtooth guide.

In a 43^{rd} aspect according to any one of the preceding aspects in combination with aspect 41, the primary sawtooth guide and the secondary sawtooth guide are circumferentially offset with respect to each other, so that a vertex of a tooth of the primary sawtooth guide faces along the vertical, in particular parallel to the working axis, to an oblique tract of the secondary sawtooth guide.

In a 44^{th} aspect according to any one of the preceding aspects, the fixed body extends in length between a first end portion and a second end portion.

In a 45^{th} aspect according to the preceding aspect, the inlet is positioned at the first end portion of the fixed body.

In a 46^{th} aspect according to any one of the two preceding aspects, the internal volume of the fixed body extends from the first end portion to the second end portion, so that the fluid is configured to enter from the inlet of the first end portion up to and beyond the second end portion.

In a 47^{th} aspect according to any one of the preceding aspects 44 to 46, the second end portion defines an open outlet portion.

In a 48^{th} aspect according to any one of the preceding aspects in combination with aspect 44, the side opening is interposed between the first end portion and the second end portion according to the direction of the working axis.

In a 49^{th} aspect according to any one of the preceding aspects in combination with aspect 44, the side opening is interposed between the second end portion and the guide path according to the direction of the working axis.

In a 50^{th} aspect according to any one of the preceding aspects in combination with aspect 44, the guide path is interposed between the side opening and the first end portion according to the direction of the working axis.

In a 51^{st} aspect according to any one of the preceding aspects in combination with aspect 44, the fixed body is configured to allow the fluid to flow from the inlet, through said internal hollow volume, and to exit through said side opening towards the at least one outlet of the movable body.

In a 52^{nd} aspect according to any one of the preceding aspects, the movable body extends in length between a first end portion and a second end portion.

In a 53^{rd} aspect according to the preceding aspect, the first end portion of the movable body faces the first end portion of the fixed body.

In a 54^{th} aspect according to any one of two preceding aspects, the second end portion of the movable body faces the second end portion of the fixed body.

In a 55^{th} aspect according to any one of the preceding aspects in combination with aspect 52, the septum of the movable body is positioned at the second end portion of the movable body.

In a 56^{th} aspect according to any one of the preceding aspects in combination with aspect 47, the septum faces the open outlet portion of the fixed body.

In a 57^{th} aspect according to any one of the preceding aspects in combination with aspect 52, the septum is positioned between, according to a direction parallel to the working axis A, the at least one outlet and the second end portion of the movable body.

In a 58^{th} aspect according to any one of the preceding aspects, according to a direction of transit of the fluid of the fixed body during an operation condition of the dispensing device, the septum is placed downstream of the at least one outlet of the movable body.

In a 59^{th} aspect according to any one of the preceding aspects, the septum defines a complete closing adapted to prevent the passage of fluid through the second end portion of the movable body, or the septum defines a partial closing, thereby allowing a reduced flow of fluid passing through towards and beyond the second end portion of the movable body.

In a 60^{th} aspect according to any one of the preceding aspects in combination with aspect 2, the septum is defined by a wall of the float.

In a 61^{st} aspect according to any one of the preceding aspects, the first sense is in the same direction of the fluid entering from the inlet to the side opening of the fixed body.

In a 62^{nd} aspect according to any one of the preceding aspects, the first sense is in the same direction from the first end portion of the fixed body to the second end portion of the fixed body.

In a 63^{rd} aspect according to any one of the preceding aspects, the second sense is in the same direction from the second end portion of the fixed body to the first end portion of the fixed body.

In a 64^{th} aspect according to any one of the preceding aspects, the second sense is opposite the direction of the fluid entering from the inlet to the side opening of the fixed body.

An aspect 65 relates to a fluid recirculation system in an aquarium comprising:
- the dispensing device according to any one of the preceding aspects;
- at least one electric pump fluidly connected to said dispensing device and configured to supply a fluid flow rate towards the dispensing device.

In an aspect 66 according to the preceding aspect, the recirculation system comprises at least one control unit operatively connected to the electric pump and configured to perform a recirculation procedure, said recirculation procedure comprising a step of controlling said electric pump to vary a fluid flow rate delivered towards the dispensing device above and below said reference flow rate.

In an aspect 67 according to any one of the preceding aspects in combination with aspect 65, the electric pump of the recirculation system is configured to suck the fluid contained in the aquarium and to deliver said pressurized fluid to the inlet of the dispensing device.

In an aspect 68 according to any one of the preceding aspects in combination with aspect 65, said recirculation procedure comprises the following steps:
- controlling the electric pump to determine a fluid flow rate towards the dispensing device;
- controlling the electric pump to vary said fluid flow rate above and below said reference flow rate with a constant or variable frequency.

It is noted that the variation of the fluid flow rate may also be defined by turning on and/or off the recirculation pump.

In an aspect 69 according to any one of the preceding aspects in combination with aspect 65, said recirculation procedure comprises defining:
- a first condition in which the fluid flow rate is greater than said reference flow rate, said septum determining a driving force on said movable body in the first sense that is greater than said return force of the return element and determining the movement of the movable body with respect to the fixed body in the first sense;
- a second condition in which the fluid flow rate is less than said reference flow rate, wherein said driving force on said movable body in the first sense is less than said return force of the return element, determining the movement of the movable body with respect to the fixed body in the second sense.

In particular, the first condition may be a condition of turned-on pump, the second condition may be condition of turned-off pump.

In an aspect 70 according to any one of the preceding aspects in combination with aspect 65, the recirculation procedure provides, in the following order, to:
A. maintain a fluid flow rate, which may optionally remain constant over time, less than the reference flow rate for a predetermined time period;
B. increase the fluid flow rate above the reference flow rate;
C. maintain the fluid flow rate, which may optionally remain constant over time, above the reference flow rate for a predetermined time period, preferably equal to the preceding time period;
D. decrease the fluid flow rate below the reference flow rate;
E. carry out steps A) through D) in a loop.

In particular, in step A, the fluid flow rate may be zero, the increase of the pump flow rate being determined by turning on the pump and the decrease of the pump flow rate being determined by turning off the pump. In this case, the turning-off time is preferably kept as short as possible.

An aspect 71 relates to a method of fluid recirculation in an aquarium, said method comprising at least the following steps:
- providing an aquarium;
- providing a recirculation system according to any one of the preceding aspects 65 to 70;
- inserting the dispensing device into the aquarium, in particular below a level of the fluid, in particular below the level of the water of the aquarium.

In an aspect 72 according to the preceding aspect, the method further comprises:
- carrying out the recirculation procedure, such that:
   ∘ when the fluid flow rate is greater than the reference flow rate, the fluid defines a force on the movable body in the first sense that is greater than the return force exerted by the return element in the second sense, determining the movement of the movable body with respect to the fixed body in the first sense;
   ∘ when the fluid flow rate is less than the reference flow rate, the fluid defines a force on the movable body in the first sense that is less than a return force exerted by the return element in the second sense, determining the movement of the movable body in the second sense.

In an aspect 73 according to any one of the preceding aspects in combination with aspect 71, said return element comprises a float configured to transmit a return force on said movable body at least along said second sense, wherein said method provides to install the dispensing device inside the aquarium with the float oriented towards the bottom wall of the aquarium.

In an aspect 74 according to any one of the preceding aspects, the first sense is oriented towards the bottom wall of the aquarium, whereas the second verse is oriented away from the bottom wall of the aquarium.

An aspect 75 relates to an assembly comprising:
- an aquarium;
- a dispensing device according to any one of the preceding aspects 1 to 64.

In an aspect 76 according to the preceding aspect, said assembly comprises a recirculation system according to any one of the aspects 65 to 70.

In an aspect 77 according to any one of the preceding aspects in combination with aspect 75, the fixed body is substantially fixed with respect to the aquarium, and said movable body is movable with respect to the fixed body and with respect to the aquarium.

In an aspect 77 according to any one of the preceding aspects in combination with aspect 75, the fixed body is attached to the electric pump.

In an aspect 78 according to any one of the preceding aspects, the electric pump comprises a filtration unit configured to filter the fluid upstream of the dispensing device.

### Brief description of the drawings

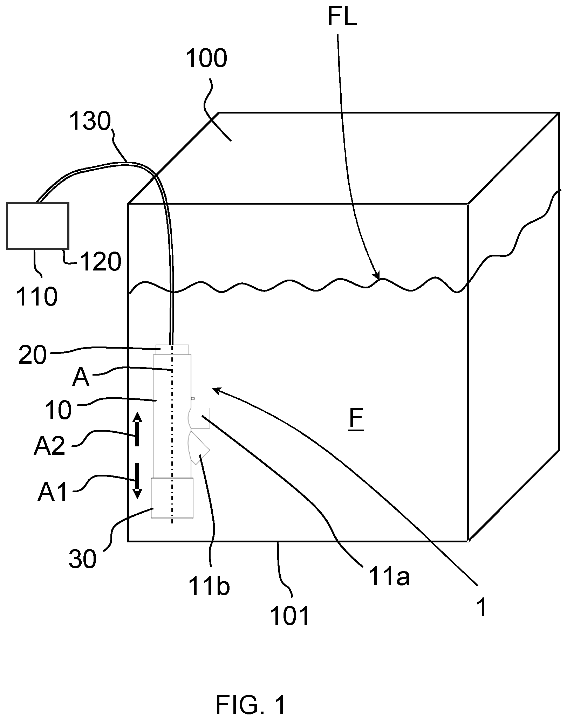

Figure 1 shows an overall view comprising the aquarium, the dispensing device, and the recirculation system;

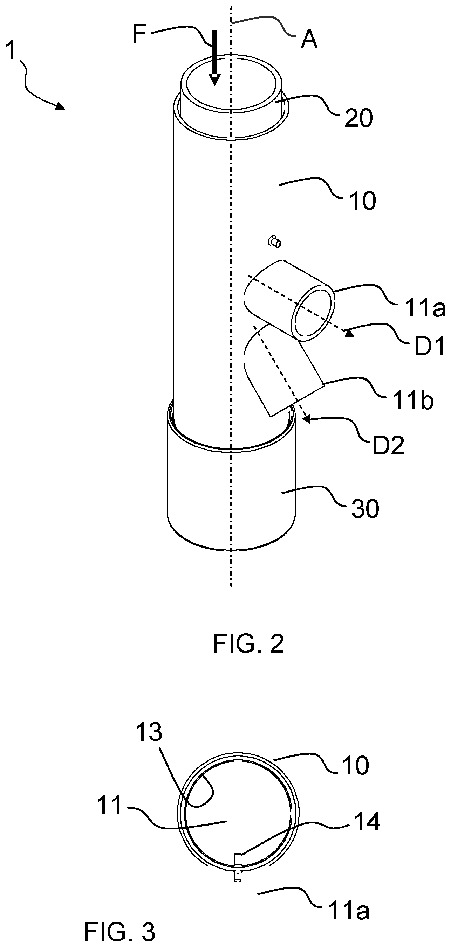

figure 2 shows a perspective view of the dispensing device;
figure 3 shows a top view of only the movable body of the dispensing device;
figure 4 shows a frontal view of the dispensing device;
figure 5 shows a sectional view of the dispensing device according to a plane parallel to the working axis;
figure 6 shows a perspective view of only the fixed body of the dispensing device;
figure 7 shows a frontal view of only the fixed body of the dispensing device;
figures 8A to 8E show successive phases of the movement of the movable body with respect to the fixed body as the position of the pin along the guide path changes.

### Detailed description

Note that, in the present detailed description, corresponding parts shown in the various figures are identified by the same reference numbers. The figures may illustrate the object of the invention using non-scale representations; therefore, parts and components shown in the figures relating to the object of the invention may be purely schematic representations.

The recirculation system described herein may comprise at least one control unit designed for controlling operating conditions. The control unit may be a single unit or may be formed by a plurality of separate control units depending on design choices and operational requirements.

"Control unit" means a component of electronic type which may comprise at least one of: a digital processor (CPU), an analog circuit, or a combination of one or more digital processors with one or more analog circuits. The control unit may be "configured" or "programmed" to execute some steps: this may be made with practically any means that allows to configure or program the control unit. For example, in the case of a control unit comprising one or more CPUs and one or more memories, one or more programs may be stored in suitable memory banks connected to the CPU(s); the program(s) contain(s) instructions that, when executed by the CPU(s), program or configure the control unit to execute the operations described in connection with the control unit. Alternatively, if the control unit is or comprises analog circuitry, the circuit of the control unit may be designed to include circuitry that is configured, in use, to process electrical signals to execute the steps regarding the control unit.

The present description relates to a dispensing device 1, as shown in the attached figures, which is designated for the recirculation of water, generically a fluid F, inside the aquarium. The term "fluid F" generically identifies a liquid water-based substance optionally comprising nutrients for flora and fauna, and minerals. In simple terms, the fluid referred to in the present description and claims identifies "the water" contained in the aquarium. The aquarium may contain fish, mollusks, and possible optional plants. The aquarium 100 may have different shapes and sizes depending on the user's needs. The aquarium essentially defines an internal tank designed to contain the fluid F, namely water, inside which fish, mollusks, or similar are immersed. In fact, the dispensing device 1 of the present invention can be installed in aquaria having different shapes and sizes.

The dispensing device 1 comprises a movable body 10 defining an internal volume 15, and a fixed body 20 at least partially housed in the internal volume 15 of the movable body 10. The fixed body 20 and the movable body 10 can both have a substantially cylindrical shape to form a pair of sleeves. Specifically, the fixed body 20 may have the shape of an internally hollow sleeve. Similarly, the movable body 10 may also have the shape of an internally hollow sleeve. The outer diameter of the fixed body 20 may be similar to the inner diameter of the movable body 20 so as to allow the two of them to mutually slide along a respective working axis A, while keeping a suitable structural stability. By way of example, a difference between the outer diameter of the fixed body 20 and the inner diameter of the movable body 10 may be between 0.1 mm and 3 mm, more specifically between 0.4 mm and 2 mm, or between 0.5 mm and 1 mm. Note that the above-mentioned working axis A may coincide with the longitudinal axis of the movable body 10 and of the fixed body 20.

The fixed body 20 extends in length between a first end portion 20a and a second end portion 20b. The fixed body 20 comprises an inlet 21, preferably positioned at the first end portion 20a, configured to receive the fluid F being supplied. The inlet 21 may comprise a connector configured to connect in a fluid-tight manner with a supply tube 130 of a recirculation system described below. The inlet 21 may externally protrude from the movable body 10.

The fixed body 20 may comprise a substantially hollow internal volume 24 which is suitable to allow the fluid coming from the inlet 21 to flow through. Therefore, in fact, the fluid F is adapted to enter the fixed body 20, and specifically the internal volume 24 of the fixed body, through the inlet 21. Note that the internal volume 24 extends from the first end portion 20a to the second end portion 20b, so that the fluid F may enter from the inlet 21 of the first end portion 20a up to and beyond the second end portion 20b. Thus, the second end portion 20b essentially defines an open outlet portion 26.

The fixed body 20 may further comprise a side opening 25 adapted to put the internal volume 24 of the fixed body 20 in fluid communication with the outside. The side opening 25 essentially defines a window on the side surface 23 of the fixed body 20. The side opening may have an angular extension, on the side surface 23, between 45° and 270°, in particular between 90° and 225°. More specifically, the side opening 25 may have an angular extension between 150° and 200°. The fluid may thus enter from the inlet 21, pass through the internal volume 24, exit laterally through the side opening 25 and simultaneously pass through the open outlet portion 26 at the second end portion 20b.

The movable body 10 extends in length between a first end portion 10a and a second end portion 10b. The first end portion 10a of the movable body 10 faces the first end portion 20a of the fixed body 20, whereas the second end portion 10b of the movable body 10 faces the second end portion 20b of the fixed body 20. By way of an example that does not limit the protection scope, the movable body 10 may have an outer diameter between 10 mm and 100 mm, in particular between 20 mm and 60 mm. In a specific embodiment, the movable body may have an outer diameter between 24 mm and 35 mm. Again, by way of an example that does not limit the protection scope, the movable body 10 may have a maximum length between 70 mm and 250 mm, in particular between 90 mm and 200 mm. In a specific embodiment, the movable body may have maximum length between 110 mm and 160 mm.

The movable body 10 comprises at least one fluid outlet 11 configured to dispense said F fluid into the aquarium 100. In a specific embodiment not shown in the attached figures, the movable body 10 may comprise a single fluid outlet 11. Said single outlet 11 may be directed transversely or orthogonally to the working axis A, namely to the longitudinal axis of the movable body 10.

Alternatively, as shown in the attached figures, the movable body 10 may comprise a first outlet 11a and a second outlet 11b positioned below the first outlet 11a according to a direction parallel to the working axis A. In fact, the second outlet 11b is interposed between the second end portion 1 Ob and the first outlet 11a.

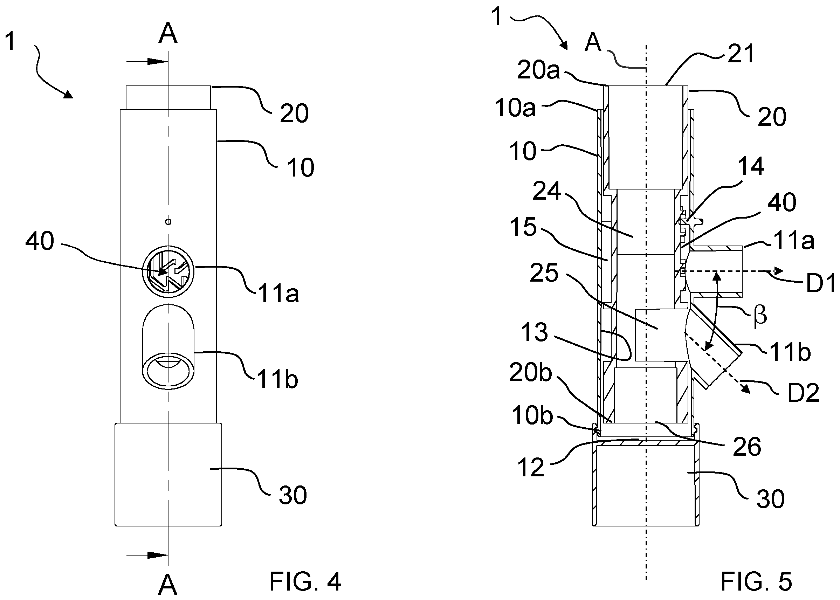

The first outlet 11a may be oriented along a first fluid delivery direction D1, whereas the second outlet 11b may be oriented along a second fluid delivery direction D2 transversal to the first fluid delivery direction D 1. The second direction D2 may deviate from the parallelism with the first direction D1 by an angle 13 between 20° and 80°, optionally between 30° and 65°, as shown in the sectional view of figure 5. The first direction D1 may be orthogonal to the working axis A, whereas the second direction D2 may be transversal to the first direction D1 to define the angle β therebetween. Note that the second direction D2 may be oriented towards the second end portion 10b of the movable body 10. The first and the second outlet 11a, 11b may substantially have a same outlet portion.

The movable body 10 further comprises a septum 12 extending transversally to the working axis A, positioned below the at least one outlet 11, in particular below the first and the second outlet 11a, 11b. The septum 12 may be positioned at the second end portion 10b of the movable body 10. In general, the septum 12 may be positioned, according to a direction parallel to the working axis A, between the at least one outlet 11 and the second end portion 10b. In other words, according to a direction of transit of the fluid from the inlet 21 to the side opening 25, the septum 12 is placed downstream of the outlet 11.

The septum 12 faces the internal volume 15 of the movable body 10 and is configured to receive in impact the fluid F coming from the inlet 21 of the fixed body 20. The septum 12 may thus define a complete closing adapted to prevent the passage of fluid through the second end portion 10b of the movable body 10. Alternatively, the septum 12 may define a partial closing, thereby allowing a reduced flow of fluid passing through towards the second end portion 10b of the movable body 10. The septum 12 may extend along a plane which is substantially orthogonal to the working axis A and may have a circular shape.

The septum 12 is configured to determine, as a result of the impact of the fluid F, a movement of the movable body 10 with respect to the fixed body 20 along the working axis A in a first sense A 1 after exceeding a reference flow rate of the fluid F. In other words, the septum 12 determines a driving force on the movable body 10 in the first sense A1. The first sense A1 may thus be in the same direction of the fluid entering from the inlet 21 to the side opening 25 of the fixed body 20. In fact, therefore, the first sense A1 may be in the same direction from the first end portion 20a to the second end portion 20b of the fixed body. The reference flow rate may be chosen as desired provided the several dimensional parameters, such as septum surface and float volume, are designed accordingly.

The dispensing device 1 comprises at least one return element 30 acting on the movable body 10 and configured to determine a movement of the movable body 10 with respect to the fixed body 20 along the working axis A in a second sense A2 opposite the first sense A1. In other words, the return element 30 is configured to determine a return force on the movable body 10 in the second sense A2. The second sense A2 may be in the same direction from the second end portion 20b to the first end portion 20a of the fixed body 20. In fact, the second sense A2 may be opposite the direction of the fluid entering from the inlet 21 to the side opening 25 of the fixed body 20.

The return element 30 may comprise a float configured to transmit a return force on the movable body 10 in accordance with the second sense A2. In this case, the float may be constrained to the movable body 10. The float can be made of any material having specific weight lower than water: for example, the float can be made of a polymeric material, for example of polystyrene foam, polyurethane foam, polyethylene, optionally in the form of foam.

As an alternative or in combination with the float, the return element 30 may comprise an elastic element, for example a spring or an elastic cable, configured to transmit a return force on the movable body 10 in the second sense A2. The elastic element may be operatively connected between the movable body 10 and the fixed body 20.

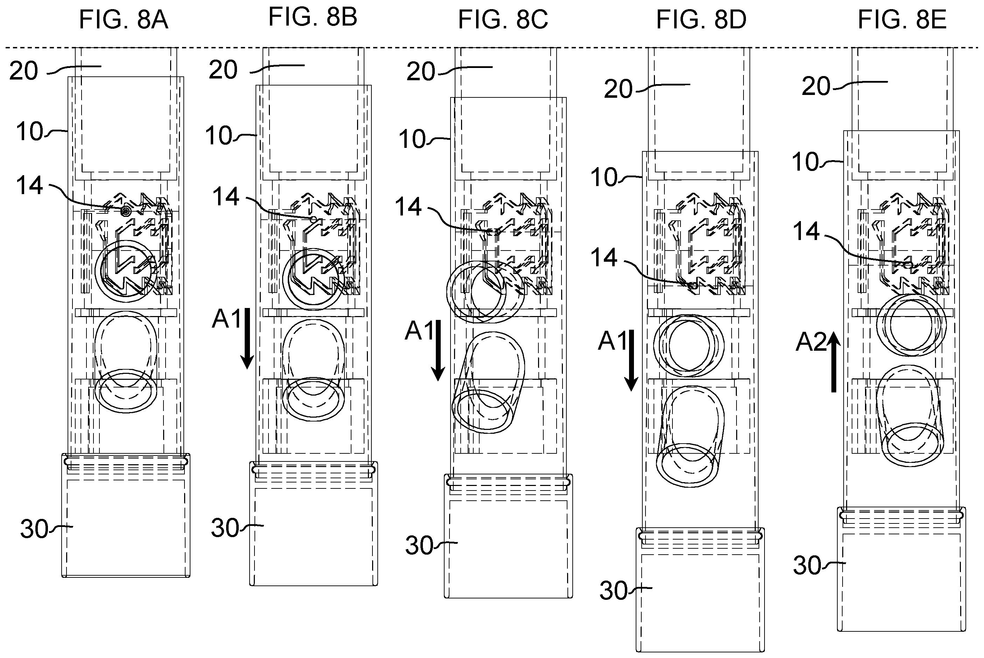

In a first condition in which the fluid flow rate is greater than the reference flow rate, the septum 12 determines a driving force on the movable body 10 in the first sense A1 that is greater than the return force of the return element 30, causing as a consequence the movement of the movable body 10 with respect to the fixed body 20 in the first sense A1, as shown in figures 8A to 8D.

In a second condition in which the fluid flow rate is less than the reference flow rate, the driving force on the movable body 10 in the first sense A1 is less than the return force of the return element 30 in the second sense A2, causing as a consequence the movement of the movable body 10 in the second sense A2, as shown in figure 8E.

Note that the movement of the movable body 10 along the working axis A in the first sense A1 and in the second sense A2 selectively determines the opening and the closing, in particular complete or at least partial closing, of the first outlet 11a and of the second outlet 11b. For example, the sectional view of figure 5 shows the second condition in which the second outlet 11b faces the side opening 25 of the fixed body 20. Specifically, the side opening 25 of the fixed body 20 selectively faces the first outlet 11a or the second outlet 11b of the movable body 10 according to the position taken by the movable body 10 with respect to the fixed body 20 during the movement thereof along the working axis A.

In the first condition, the movement of the movable body 10 in the first sense A1 causes the side opening 25 to face the first outlet 11a to deliver fluid through the first outlet 11a; at the same time, a side surface of the fixed body 20 blocks the second outlet 11b, thereby completely precluding or reducing the delivery of fluid from the second outlet 11b.

In the second condition, the movement of the movable body 10 in the second sense A2 causes the side opening 25 to face the second outlet 11b to deliver fluid through the second outlet 11b; at the same time, a side surface of the fixed body 20 blocks the first outlet 11a, thereby completely precluding or reducing the delivery of fluid from the first outlet 11a. When the first outlet 11a is in an open position to allow fluid delivery, the second outlet 11b is thus in a closed position to prevent fluid delivery, and vice versa.

A flow-rate variation above and below the reference flow rate thus allows to switch from the first condition to the second condition, thereby causing a selective alternation of fluid delivery from the first outlet 11a and from the second outlet 11b. In other words, thanks to the presence of the septum 12 and of the return element 30 which act on the movable body 10 in opposite senses A1 and A2, the change in fluid flow rate acts as a drive to switch fluid delivery from the first outlet 11a to the second outlet 11b and vice versa. The fact that the fluid delivery direction of the first outlet 11a and the fluid delivery direction of the second outlet 11b are different from each other allows to periodically vary the fluid delivery direction as the flow rate changes, thereby improving fluid recirculation inside the aquarium.

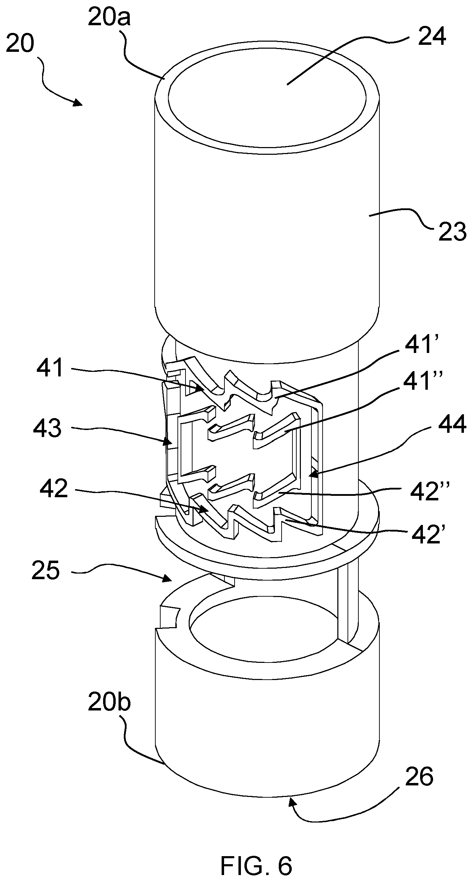

The previously described dispensing device 1 may further comprise a guide path 40 of the type shown in detail in figures 6 to 8E. In this case, the outer surface 23 of the fixed body 20 comprises the guide path 40 and the inner surface 13 of the movable body 10 comprises a pin 14 protruding towards the fixed body 20 and inserted in the guide path 40 of the fixed body 20. The pin 14 is configured to slide within the guide path 40, such that a movement of the movable body 10 axially along the working axis A and in rotation with respect to the fixed body 20 is constrained to the specific shape of the guide path 40.

Note that, as an alternative to the embodiment shown in the attached figures, the guide path 40 may be in the inner surface 13 of the movable body 10, and the pin 14 may be in the outer surface 23 of the fixed body 20.

The guide path 40 defines a groove adapted to receive and guide the pin 14: a change in the flow rate of the fluid F above and below the reference flow rate is thus adapted to determine the movement of the pin 14 along the guide path 40. In fact, the guide path 40 is configured to also determine, as a result of the mutual movement of the movable body 10 with respect to the fixed body 20 along the working axis A, a rotation of the movable body 10 with respect to the fixed body 20 about the working axis A.

Specifically, the guide path 40 comprises at least one sawtooth portion 41, 42 extending along a direction orthogonal or transversal to the working axis A. Specifically, the sawtooth portion 41, 42 extends circumferentially around the working axis A. The sawtooth portion 41, 42 alternates vertical tracts and oblique tracts: the vertical tracts are configured to constrain the movement of the movable body 10 only along the working axis A, whereas the oblique tracts are configured to constrain the movement of the movable body 10 both along the working axis A and about the working axis A to determine a rotation of the movable body 10 with respect to the fixed body 20. The change in the flow rate of the fluid F above and below said reference flow rate is adapted to determine the movement of the pin 14 along the sawtooth portion 41, 42 of the guide path 40, to determine the movement of the pin 14 from tooth to tooth of the sawtooth portion 41, 42. Note that when the fluid flow rate is maintained constant above or below the reference flow rate, the pin 14 stops at valleys of the guide path 40, thereby defining a stable, i.e. fixed, position of the movable body with respect to the fixed body. Once the flow rate has been varied exceeding the value of the reference flow rate, the axial movement of the movable body causes the pin 14 to come out of said valleys, contacting the oblique tracts and thus causing the rotation of the movable body 10 with respect to the fixed body 20.

The sawtooth portion 41, 42 may comprise a pair of sawtooth portions, that is it may comprise a first sawtooth portion 41 extending circumferentially between a respective first end 41a and a second end 41b, and a second sawtooth portion 42 spaced apart from the first sawtooth portion 41 along a direction parallel to the working axis A. The second sawtooth portion 42 extends circumferentially between a respective first end 42a and a second end 42b, and it is placed below the first sawtooth portion 41. The first sawtooth portion 41 has a shorter distance to the first end portion 20a of the fixed body 20 than the distance between the second sawtooth portion 42 and the first end portion 20a.

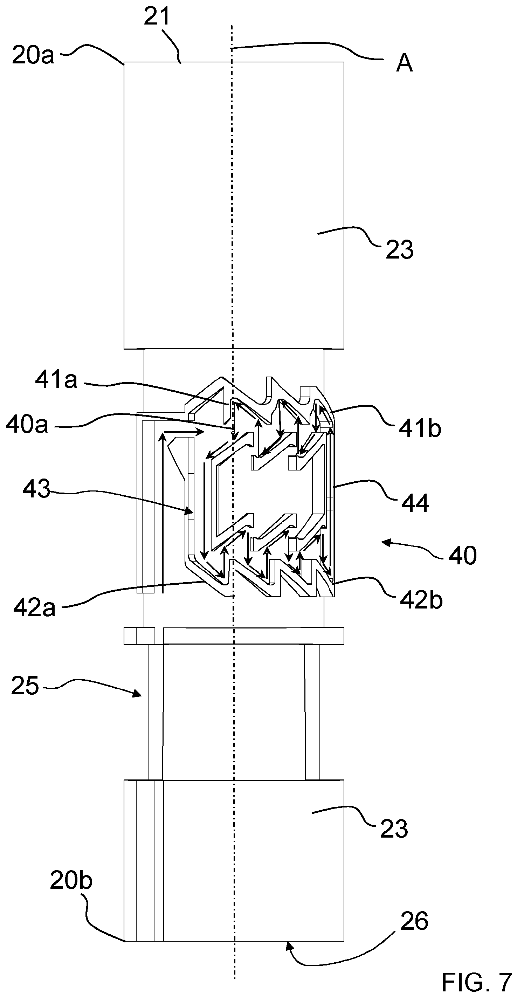

The guide path 40 further comprises a first side tract 43 arranged as a connection between the first end 41a of the first sawtooth portion 41 and the first end 42a of the second sawtooth portion 42, and a second side tract 44 arranged as a connection between the second end 41b of the first sawtooth portion 41 and the second end 42b of the second sawtooth portion 42. In fact, the first sawtooth portion 41, the second sawtooth portion 42, the first side tract 43 and the second side tract 44 define in combination the guide path 40, inside which the pin 14 is configured to slide in loop. A loop path 40a is shown in figure 7 by respective arrows indicating the direction of movement of the pin 14 along the guide path 40.

Note that the guide path 40 is configured to allow the pin 14 to only slide clockwise or counterclockwise.

When the pin 14 is at the first sawtooth portion 41, the movable body 14 is in a raised position, such that the second opening 11b of the movable body 10 faces the side opening 25 of the fixed body 20 to allow the fluid to be dispensed from the second opening 11b of the movable body 10. In such raised position, the first opening 11a of the movable body 10 is in a closed position since it faces a closed side surface of the fixed body 20. Optionally, in such raised position, the first opening 11a of the movable body 10 faces the guide path 40 of the fixed body 20.

On the contrary, when the pin 14 is at the second sawtooth portion 42, the movable body 14 is in a lowered position, such that the first opening 11a of the movable body 10 faces the side opening 25 of the fixed body 20 to allow the fluid to be dispensed from the first opening 11a of the movable body 10. In such lowered position, the second opening 11b of the movable body 10 is in a closed position since it faces a closed side surface of the fixed body 20.

The at least one sawtooth portion 41, 42 may comprise a primary sawtooth guide 41', 42' and a secondary sawtooth guide 41", 42" facing the primary sawtooth guide 41' to define a groove therebetween which is adapted to receive in sliding the pin 14. The pin 14 is thus configured to transit in the groove in interposition between the primary sawtooth guide and the secondary sawtooth guide. In fact, the primary sawtooth guide is external to the secondary sawtooth guide.

Note that the primary sawtooth guide 41', 42' and the secondary sawtooth guide 41", 42" are circumferentially offset with respect to each other, so that a vertex of a tooth of the primary sawtooth guide faces along the vertical, namely parallel to the working axis A, to an oblique tract of the secondary sawtooth guide. This allows the pin 14 to pass from tooth to tooth as the flow rate of the fluid F changes above and below the reference flow rate.

Note that when the dispensing device 1 is installed inside the aquarium, the fixed body 20 is substantially fixed with respect to the aquarium 100, whereas the movable body 10 is movable with respect to the fixed body 20 and with respect to the aquarium 100. For example, the fixed body 20 may be constrained to a side wall of the aquarium.

The dispensing device 1, when installed inside the aquarium, has its own working axis, i.e. the longitudinal axis of the movable body and/or fixed body in a substantially vertical position, namely parallel to the force of gravity.

In case the dispensing device 1 comprises the float as return element 30, the float may be positioned facing a bottom wall 101 of the aquarium 100. In fact, the float may be interposed, along the vertical, between the bottom wall 101 of the aquarium and the outlet 11 of the movable body 10.

The present disclosure also relates to a recirculation system for the recirculation of the fluid F in the aquarium 100, the recirculation system comprising the previously described dispensing device 1 and an electric pump 110 fluidly connected to the dispensing device 1, for example through a delivery pipe 130. The electric pump 110 is configured to supply a flow rate of the fluid F towards the dispensing device 1, so as to cause fluid recirculation inside the aquarium. The electric pump may be configured to suck fluid from the aquarium and to deliver it towards the dispensing device 1. The electric pump 110 may further comprise a filtration unit configured to filter the fluid that has been sucked and subsequently sent to the dispensing device 1. In this case, the filtration unit may be positioned upstream of the dispensing device 1.

The system further comprises a control unit 120 operatively connected to the electric pump 110 and configured to perform a recirculation procedure.

The recirculation procedure may comprise a step of controlling the electric pump 110 to vary the fluid flow rate delivered towards the dispensing device 1 above and below the reference flow rate. For this reason, the electric pump comprises a respective electric motor configured to be speed-controlled by the control unit. The electric motor may be a synchronous motor or a direct-current motor. The recirculation procedure may involve varying the flow rate of the fluid F above and below said reference flow rate with a constant or variable frequency.

Specifically, the recirculation procedure comprises defining the first condition in which the fluid flow rate is greater than the reference flow rate: in this case, the septum 12 determines a driving force on the movable body 10 in the first sense A1 that is greater than the return force of the return element 30, thereby causing the movement of the movable body 10 with respect to the fixed body 20 in the first sense A1.

The recirculation procedure further comprises defining a second condition in which the fluid flow rate is less than the reference flow rate: in this case, the driving force on the movable body 10 in the first sense A1 is less than the return force of the return element 30, thereby causing the movement of the movable body 10 with respect to the fixed body 20 in the second sense A2.

The recirculation procedure may provide, in the following order, to:
A. maintain a fluid flow rate, which may optionally remain constant over time, less than the reference flow rate for a predefined time period;
B. increase the fluid flow rate above the reference flow rate;
C. maintain the fluid flow rate, which may optionally remain constant over time, above the reference flow rate for a predefined time period;
D. decrease the fluid flow rate below the reference flow rate;
carry out steps A) through D) in a loop.

The present disclosure also relates to a method of recirculation of a fluid F in an aquarium 100. The method comprises at least the following steps:
- providing an aquarium;
- providing the previously described recirculation system;
- inserting the dispensing device 1 into the aquarium below the fluid level FL, in particular below the level of the water of the aquarium;
- carrying out the recirculation procedure.

During the recirculation procedure, when the fluid flow rate is greater than the reference flow rate, the fluid defines a force on the movable body 10 in the first sense A1 that is greater than the return force exerted by the return element in the second sense A2, thereby determining the movement of the movable body 10 with respect to the fixed body in the first sense A1. Instead, when the fluid flow rate is less than the reference flow rate, the fluid defines a force on the movable body 10 in the first sense A1 that is less than a return force exerted by the return element in the second sense A2, thereby determining the movement of the movable body 10 in the second sense A2.

## Claims

1. A dispensing device (1) for fluid (F) delivery into an aquarium (100), said dispensing device (1) comprising a movable body (10) and a fixed body (20); one of said movable body (10) and said fixed body (20) defining an internal volume (15); the other of said movable body (10) and said fixed body (20) being at least partially housed within said internal volume (15);
wherein:
- the fixed body (20) comprises an inlet (21) configured to receive said fluid (F) being supplied;
- the movable body (10) is slidable with respect to said fixed body (20) along a working axis (A) and comprises:
∘ at least one fluid outlet configured to dispense said fluid (F) into the aquarium (100);
∘ a septum (12) extending transversally to the working axis (A), said septum (12) facing the internal volume (15) of the movable body (10) and being configured to receive in impact the fluid (F) coming from said inlet (21) of the fixed body (20),
wherein said septum (12) is configured to determine, as a result of said impact, a movement of the movable body (10) with respect to the fixed body (20) along said working axis (A) in a first sense (A1) after exceeding a reference flow rate of said fluid (F);
wherein the dispensing device (1) further comprises at least one return element (30) acting on said movable body (10) and configured to determine a movement of said movable body (10) with respect to the fixed body (20) along said working axis (A) in a second sense (A2) opposite said first sense (A1), wherein said movement of the movable body (10) with respect to the fixed body (20) along said working axis (A) determines a change in position and/or orientation of said fluid outlet with respect to the fixed body.

2. The dispensing device (1) according to claim 1, further comprising a guide path (40) and a pin (14), wherein said guide path (40) is configured to receive said pin (14), said guide path (40) and said pin (14) being integral respectively to the fixed body (20) and to the movable body (10) or vice versa, wherein said movement of the movable body (10) with respect to the fixed body (20) determines the displacement of the pin (14) in the guide path (40) causing a relative rotation of the movable body (10) with respect to the fixed body (20).

3. The dispensing device (1) according to claim 2, wherein said guide path (40) comprises at least one sawtooth portion (41, 42) extending along a direction orthogonal or transversal to said working axis (A), said sawtooth portion (41, 42) alternating vertical tracts and oblique tracts,
wherein said vertical tracts are configured to constrain the movement of the movable body (10) along said working axis (A), and said oblique tracts are configured to constrain the movement of the movable body (10) both along said working axis (A) and about said working axis (A) to determine a rotation of the movable body (10) with respect to the fixed body (20),
wherein a change in the fluid (F) flow rate above and below said reference flow rate is adapted to determine the movement of the pin (14) along said sawtooth portion (41, 42) of the guide path (40), in particular to determine the movement of the pin (14) from tooth to tooth of said sawtooth portion (41, 42).

4. The dispensing device (1) according to claim 3, wherein said at least one sawtooth portion (41, 42) comprises:
- a first sawtooth portion extending circumferentially between a respective first end (41a) and a second end (41b), and
- a second sawtooth portion (42) spaced apart from the first sawtooth portion along a direction parallel to said working axis (A), said second sawtooth portion (42) extending circumferentially between a respective first end (42a) and a second end (42b), said second sawtooth portion (42) being placed below the first sawtooth portion;
said guide path (40) further comprising:
- a first side tract (43) arranged as a connection between the first end (41a) of the first sawtooth portion and the first end (42a) of the second sawtooth portion (42), and
- a second side tract(44) arranged as a connection between the second end (41b) of the first sawtooth portion and the second end (42b) of the second sawtooth portion (42);
wherein the first sawtooth portion, the second sawtooth portion (42), the first side tract (43) and the second side tract (44) define in combination said guide path (40), inside which the pin (14) is configured to slide in loop,
wherein the guide path (40) is configured to allow the pin (14) to only slide in a predetermined rotation sense.

5. The dispensing device (1) according to one of the preceding claims 3 or 4, wherein the at least one sawtooth portion (41, 42) comprises a primary sawtooth guide and a secondary sawtooth guide facing the primary sawtooth guide to define a groove therebetween which is adapted to receive in sliding the pin (14),
the pin (14) being configured to transit in said groove in interposition between the primary sawtooth guide and the secondary sawtooth guide,
wherein the primary sawtooth guide and the secondary sawtooth guide are circumferentially offset with respect to each other, so that a vertex of a tooth of the primary sawtooth guide faces along the vertical, parallel to the working axis (A), to an oblique tract of the secondary sawtooth guide.

6. The dispensing device (1) according to any one of the preceding claims, wherein said return element (30) comprises at least one of:
- a float constrained to said movable body (10) and therefore configured to transmit a return force on said movable body (10) in said second sense (A2);
- at least one elastic element, operatively connected between the movable body (10) and the fixed body (20), configured to transmit a return force on said movable body (10) in said second sense (A2);
wherein:
- in a first condition in which the fluid flow rate is greater than said reference flow rate, said septum determines a driving force on said movable body (10) in the first sense (A1) that is greater than said return force of the return element (30), causing the movement of the movable body (10) with respect to the fixed body (20) in the first sense (A1);
- in a second condition in which the fluid flow rate is less than said reference flow rate, said driving force on said movable body (10) in the first sense (A1) is less than said return force of the return element (30) in the second sense (A2), causing the movement of the movable body (10) in the second sense (A2).

7. The dispensing device (1) according to any one of the preceding claims, wherein said at least one fluid outlet of the movable body (10) comprises a first outlet (11a) and a second outlet (11b) positioned below the first outlet (11a),
wherein the first outlet (11a) is oriented along a first fluid delivery direction (D1) and the second outlet (11b) is oriented along a second fluid delivery direction (D2) tilted with respect to said first fluid delivery direction (D1),
wherein the movement of the movable body (10) along the working axis (A) in the first sense (A1) and in the second sense (A2) selectively determines the at least partial opening and closing of the first outlet (11a) and of the second outlet (11b),
wherein, when the first outlet (11a) is in an open position to allow the fluid delivery, the second outlet (11b) is in a closed position to prevent the fluid delivery, and when the first outlet (11a) is in a closed position to prevent the fluid delivery, the second outlet (11b) is in an open position to allow the fluid delivery.

8. The dispensing device (1) according to claim 7, wherein the movable body (10) is sleeve-shaped and the fixed body (20) is sleeve-shaped, wherein the movable body (10) and the fixed body (20) are concentric with each other,
and wherein the fixed body (20) comprises an internal hollow volume (24) and a side opening (25) configured to allow the fluid (F) to flow from the inlet (21), through said internal hollow volume (24), and to exit through said side opening (25), in particular wherein said side opening (25) of the fixed body (20) faces towards the movable body (10),
wherein said side opening (25) selectively faces the first outlet (11a) or the second outlet (11b) of the movable body (10) according to a position taken by the movable body (10) with respect to the fixed body (20) during the movement thereof along the working axis (A),
wherein:
- in the first condition the side opening (25) faces the first outlet (11a) to deliver fluid through said first outlet (11a), while a side surface of the fixed body (20) blocks the second outlet (11b);
- in the second condition the side opening (25) faces the second outlet (11b) to deliver fluid through said second outlet (1 1b), while a side surface of the fixed body (20) blocks the first outlet (11a).

9. Fluid recirculation system (F) in an aquarium (100) comprising:
- the dispensing device (1) according to any one of the preceding claims;
- at least one electric pump (110) fluidly connected to said dispensing device (1) and configured to supply a fluid (F) flow rate towards the dispensing device (1);
- at least one control unit (120) operatively connected to the electric pump (110) and configured to perform a recirculation procedure, said recirculation procedure comprising a step of controlling said electric pump (110) to vary a fluid flow rate delivered towards the dispensing device (1) above and below said reference flow rate.

10. Assembly comprising:
- an aquarium;
- a recirculation system according to claim 9,
wherein the fixed body (20) is substantially fixed with respect to the aquarium (100), and said movable body (10) is movable with respect to the fixed body (20) and with respect to the aquarium (100).
